Europäisches Patentamt

European Patent Office

Office européen des brevets

(11) Publication number: **0 227 384**
**A2**

## (12) EUROPEAN PATENT APPLICATION

(21) Application number: 86309643.4

(22) Date of filing: 10.12.86

(51) Int. Cl.4: **A41D 19/00** , A41D 31/02 , A43B 1/00 , B32B 27/08

(30) Priority: 11.12.85 JP 189657/85
07.02.86 JP 23973/86

(43) Date of publication of application:
01.07.87 Bulletin 87/27

(84) Designated Contracting States:
AT BE CH DE ES FR GB GR IT LI LU NL SE

(71) Applicant: JAPAN GORE-TEX, INC.
42-5, 1-chome Akazutsumi
Setagaya-ku Tokyo 156(JP)

(72) Inventor: Imai, Takashi
831-2, Kinugasa Wake-Cho
Wake-Gun Okayama-Ken 709-4(JP)
Inventor: Moriya, Kosuke
1898-55, Miyoshi Okayama City
Okayama-Ken 703(JP)

(74) Representative: Taylor, Derek George et al
Mathisen, Macara & Co. The Coach House
6-8 Swakeleys Road
Ickenham Uxbridge UB10 8BZ(GB)

(54) Waterproof and water vapour-permeable materials and gloves made thereof.

(57) A sheet material is obtained by adhesion-laminating a porous polytetrafluoroethylene film on to a gas-permeable resin layer. A hydrophilic resin layer can be applied to the opposite surface of the porous polytetrafluoroethylene or between the latter and the gas-permeable layer. Such materials exhibit both waterproof and water vapour-permeable properties, resulting from the porous polytetrafluoroethylene film or hydrophilic resin layer, and are reinforced, and provided, if desired, with artificial leather ornamentation by the gas-permeable resin layer. Accordingly, gloves or other garments, manufactured using such materials, are waterproof and water vapour-permeable and are comfortable to wear since internal condensation is avoided.

EP 0 227 384 A2

## WATERPROOF AND WATER VAPOUR-PERMEABLE MATERIALS AND GLOVES MADE THEREOF

This invention relates to waterproof and water vapour-permeable materials and articles, such as gloves, made from such materials in sheet form.

A requirement exists for a waterproof, water vapour-permeable material in sheet form suitable for making articles such as bags and shoes, and clothing such as gloves, socks hats and underwear. Such materials need to be soft materials capable of protecting against entry of rain, fog or other forms of water from outside but capable, particularly in the case of clothing, of allowing vapour to permeate from the inside to the outside. Such materials are required for indoor or outdoor use and for use in factories and in clean rooms and may be required to have a dust-resistant finish.

According to the present invention there is provided a waterproof and water vapour-permeable laminated sheet material comprising a porous polytetrafluoroethylene film and a gas-permeable resin layer.

The present invention also provides a waterproof and water vapour-permeable garment comprising at least two parts made of porous polytetrafluoroethylene film and bonded together along their adjacent edges and having a continuous coating thereon of a gas-permeable material.

The invention will now be particularly described by way of example with reference to the accompanying drawings in which:-

Figure 1 is a section through one embodiment of laminated sheet material according to the present invention;

Figures 2,3, and 4 are sections through second, third and fourth embodiments of the invention;

Figures 5 and 6 are photomicrographs of a layer of porous polytetrafluoroethylene forming part of a laminated material;

Figure 7 is a plan view of a glove according to the invention part cut-away, and

Figures 8 and 9 are sections through an article, such as the hand or a finger portion of a glove, made in accordance with the invention.

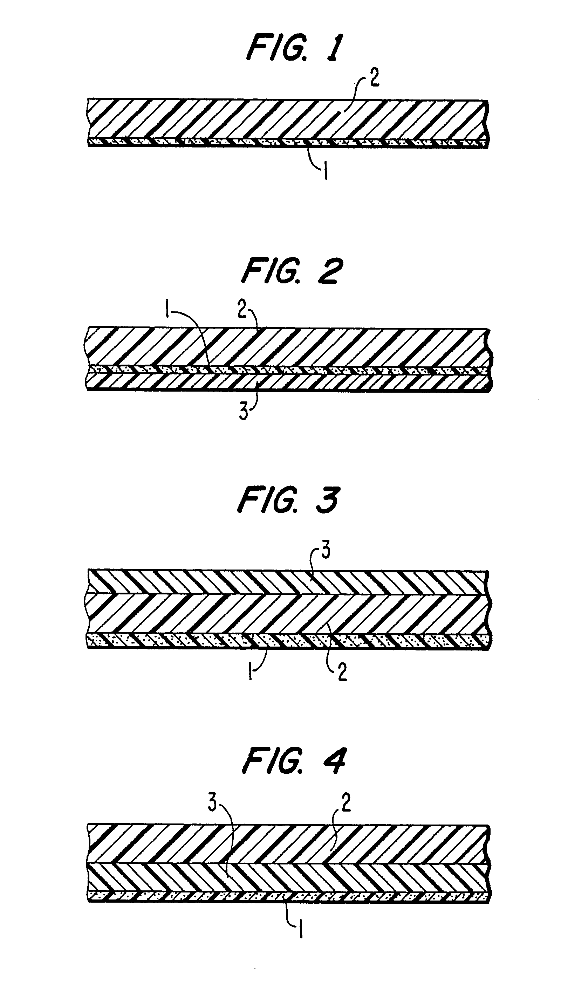

In the embodiment of the invention shown in Figure 1 a gas-permeable resin layer 2 is formed on a porous polytetrafluoroethylene film 1. If required, and as shown in Figure 2, the gas-permeable resin layer 2 may be formed on one surface of the porous polytetrafluoroethylene film 1, and a hydrophilic resin layer 3 is formed on the opposite surface. Further as shown in Figure 3, the gas-permeable resin layer 2 may be formed between the porous polytetrafluoroethylene film 1 and the hydrophilic resin layer 3. Further, as shown in Figure 4, the hydrophilic resin layer 3 may be formed between the porous polytetrafluoroethylene film 1 and the gas permeable resin layer 2.

The porous polytetrafluoroethylene film 1 described above is rendered porous by subjecting polytetrafluoroethylene film to either a calendering or a stretching treatment or to both treatments.

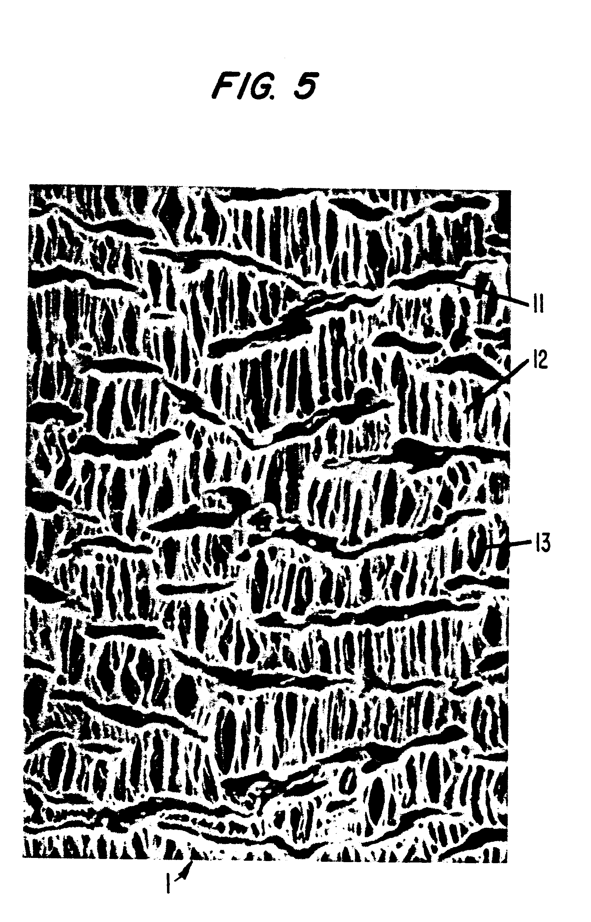

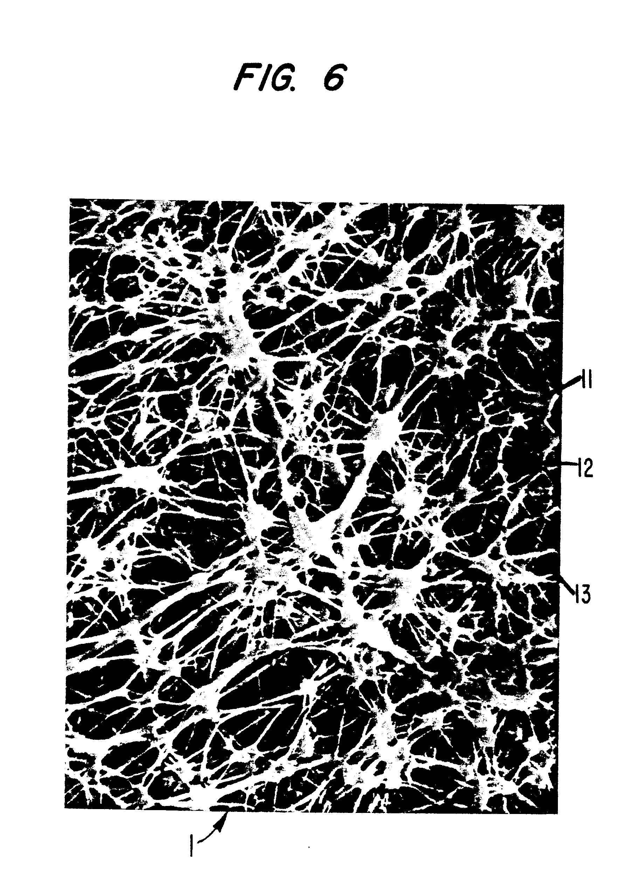

Figure 5 and Figure 6 show the microstructure of a polytetrafluoroethylene film which has been obtained by subjecting the film or membrane to a stretching treatment in one direction and by stretching in multi-directions, respectivly. In each case, a very large number of microfibers 12 are formed extending between a large number of micro-knots or nodes 11 like a spider's web. The pores 13 between such microfibers 12 reach approximately 0.01 micrometers in diameter and it is possible to obtain pore sizes of about 0.1 to 1.0 micrometers. The film exhibits a satisfactory waterproof property due to such fine pores in combination with the natural water repellency of polytetrafluoroethylene. In addition, the pores give the film a bulk porosity of 60% or more, generally 75 to 95%, which provides the film with a desired gas permeability and water vapour-permeability with a film thickness as low as about 0.01 to 0.1 mm.

The gas-permeable resin layer 2 to be adhesion-laminated on to such a porous polytetrafluoroethylene film 1 is one obtained by appropriately incorporating a surfactant, or flow aid, in a synthetic resin for example of the polyether type or polyacryl type, the gas permeability extending over the entire resin layer. It is formed in a layer thickness of approximately 0.1 to 3 mm and protects the thin porous polytetrafluoroethylene film 1 from physical damage and possibly also from chemical polution and can impart a preferred appearance to the porous polytetrafluoroethylene film 1. The sheet material formed by both these layers 1 and 2 can have both high durability and gas permeability as high as 5000 g/m².24 hr. or more, and also an effective waterproofness of 2 kg/cm² or more. A preferred material for the gas-permeable layer is a continuous porous polyurethane resin layer. A foamed polyvinyl chloride resin can also be used.

The hydrophilic resin layer 3 formed on to one surface of the porous polytetrafluoroethylene film 1 can be composed of materials such for example as polyether urethane, perfluorosulfonic acid type or amono acid type and prevents deterioration of waterproofness due to contamination of the layer 1 with polutants such as oil or surfactants. A material such as the urethane layer disclosed in U.S. Patent 4,194,041 can be used for the hydrophilic resin layer.

The sheet material according to the present invention can be prepared by adhesion-laminating the gas-permeable resin layer 2 on to either surface of the porous polytetrafluoroethylene film 1 or adhesion-laminating the layer 2 on to both surfaces of the porous polytetrafluoroethylene film 1 or adhesion-laminating the hydrophilic layer 3 between the porous polytetrafluoroethylene film 1 and the gas-permeable resin layer 2. Adhesion-laminating can be performed by either coating or casting a layer on a surface or by noncontinuously laminating an already prepared layer to the surface. Further by incorporating optional colouring agents and forming coloured coatings, the materials can be given an ornamental surface appearance, for example similar to that of leather. These sheet materials can be further laminated on to knitted or woven fabrics or non-woven fabrics.

The present invention will be described further by reference to the following examples.

EXAMPLE 1

A porous polytetrafluoroethylene film was formed having a thickness of 60 micrometers, porosity of 80% and a maximum pore diameter of 0.6 micrometers. The water resistance pressure and gas permeability were 3.0 kg/cm² and 20,000 g/m².24 hr. or above. One surface of this film was coated with a 0.5 mm thick coating of a mixture of;

Polyester type polyurethane elastomer 100 parts
Cationic surfactant 3 parts
Silicone oil type aid 3 parts
DMF (DIMETHYLFORMAMIDE) 100 parts

The composite material was immersed in water at 20°C to solidify in 10 minutes. Thereafter, it was washed with hot water of 50°C for 30 minutes and then dry-treated at 100°C for 10 minutes to form a gas-permeable resin layer.

EXAMPLE 2

In the composition of the gas-permeable resin layer in Example 1, 100 parts of polyether type polyurethane elastomer were used in place of polyester type polyurethane elastomer and treated under the same conditions as in Example 1.

EXAMPLE 3

The system was treated in a manner similar to·that of Example 1 except that the gas-permeable coating was applied to one surface of the porous polytetrafluoroethylene film after having formed a hydrophilic resin coating layer of polyether type urethane on the opposite surface of the porous polytetrafluoroethylene film in Example 1, to produce an article.

With the materials obtained in Exmaples 1 to 3 as described above, the water resistance pressure and the water vapour permeability were measured according to the JIS L1092B method and the ASTM E96-66BW method (MDM method), respectively. The results are shown in the following table.

3

|  | EXAMPLE 1 | EXAMPLE 2 | EXAMPLE 3 |
|---|---|---|---|
| Water resistance pressure (kg/cm$^2$) | more than 3.0 | more than 3.0 | more than 3.0 |
| Water vapour permeability (g/m$^2$.24 hr) | 52,000 | 49,000 | 29,000 |

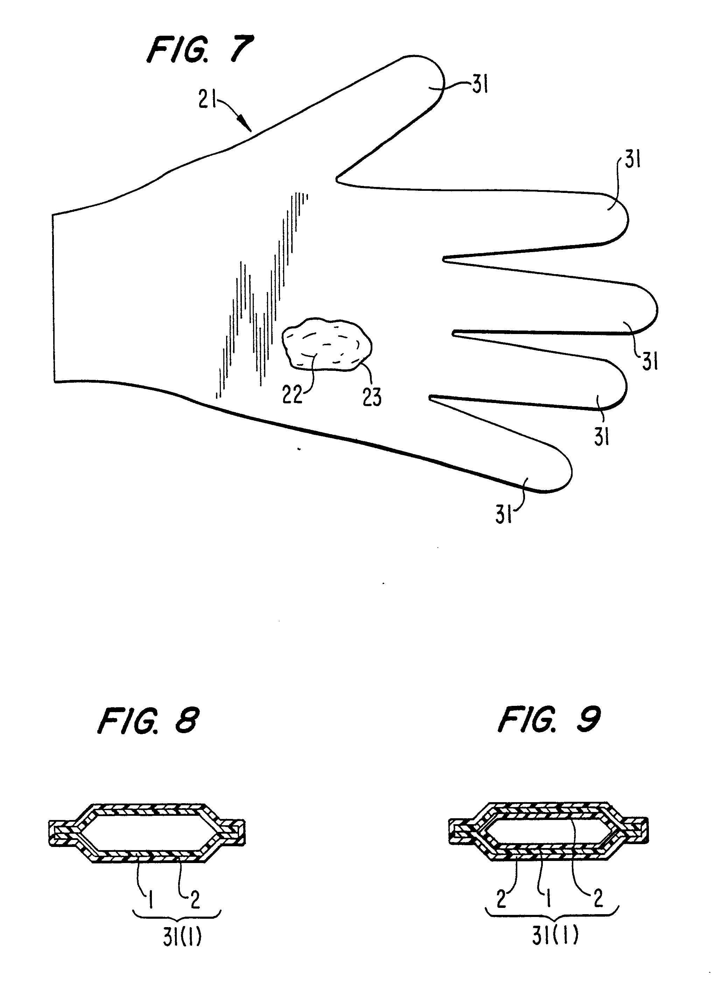

The application of the material of the present invention to a glove is illustrated in Figures 7,8 and 9. The glove has fingers 31 formed integrally with a glove body 21, in which an opening is formed for insertion and removal of the hand. Such a glove body 21 is formed from sheet material comprising a sheet 22 of porous polytetrafluoroethylene film or of an adhesion-laminated porous polytetrafluoroethylene film with a hydrophilic layer thereon. A continuous porous resin layer 23 is integrally adhesion-laminated on to the outer surface of the glove body 21 thus formed.

Further the continuous porous resin layer 23 may also be formed on the inner surface of the sheet 22 and the resulting structure of the fingers 31 is shown in cross section in Figure 8 and Figure 9. The system in which the continuous porous resin layer 2 is also formed on to the inner surface of the glove as shown in Figure 9 also has waterproof and water vapour-permeable property as described above. These coatings can be appropriately formed by turning the glove body 21 inside out and subjecting it to the immersion and heating treatments before or after, forming the resin layer 3 on the outer surface, and then turning the glove right side out again. A glove in which the resin layer was thus formed inside can prevent damage to the sheet 22 by a finger nail of the wearer.

In the manufacture of a glove or other garment, two or more shaped pieces of porous polytetrafluoroethylen film can be superimposed on one another, and bonded together along adjacent edges as shown in Figures 8 and 9.

When a hydrophilic resin layer is laminated to the porous polytetrafluoroethylene layer in a sheet material or in an article, the waterproof property of the polytetrafluoroethylene layer is preserved by preventing contamination with oil, perspiration and surfactants. The hydrophilic resin layer however lacks gas permeability. Therefore, when one attempts to obtain water vapour-permeability only with this hydrophilic resin layer, its coating thickness is limited so that the hydrophilic resin layer cannot be a highly durable material if high water vapour permeability is to be achieved and maintained. The material obtained by ahesion-laminating the gas permeable resin layer on to the porous polytetrafluoroethylene film after having formed the hydrophilic resin layer thereon, ensures the gas permeability while imparting thickness and strength to the material by means of the gas permeable resin layer. Therefore, the hydrophilic resin layer can be thin. Thus, the waterproof and water vapour-permeable properties can be achieved with excellent durability.

In a glove formed from waterproof water vapour-permeable sheet, the continuous porous resin layer can be integrally formed on the outer surface of the glove body in a simple manner by coating and then drying or wet solidification of the coating after simply immersing.

Using materials having both waterproof property and water vapour permeability, gloves can be made that effectively prevent the hand and fingers of the wearer becoming wet with liquid and largely prevent internal wetness due to condensation. Moreover, the waterproof and water vapour-permeable sheet is protected by the continuous porous resin layer 23 so that it has excellent durability. Further, by covering the outer surface of the glove body 1 with the continuous resin layer 23, the glove expands to fit the inserted fingers so that it can be satisfactorily utilised as a glove for various working operations or domestic use, or a glove for use in a clean room.

It is not always necessary that the waterproof and water vapour-permeable sheet 22 be applied to the entire surface of the glove body 21. It can be used only in the fingers of the glove, in a part of the fingers, or in the palm. The properties and effects inherently possessed by the waterproof and water vapour-permeable materials can be sufficiently exhibited to achieve a desired result.

## Claims

1. A waterproof and water vapour-permeable sheet laminated material comprising a porous polytetrafluoroethylene film and a gas-permeable resin layer.

2. A sheet material according to claim 1 having a hydrophilic resin layer adhesion-laminated thereon.

3. A waterproof and water vapour-permeable glove which has been made, at least in part, from the material claimed in claim 1 or claim 2.

4. A waterproof and water vapour-permeable glove comprising hand and finger portions formed of porous polytetrafluoroethylene and having a continuous coating thereon of a gas permeable material.

5. A glove according to claim 4 wherein the continuous coating extends over the outside of the glove.

6. A glove according to claim 4 or claim 5 wherein the continuous coating extends over the inside, or over both the inside and outside, of the glove.

7. A glove according to claim 4 wherein a hydrophilic coating extends over the surface of the glove on the opposite side of the porous polytetrafluoroethylene to the gas permeable material.

8. A glove according to any one of claims 4 to 7 wherein the and and finger portions are formed by a front sheet and a back sheet bonded together along their edges.

9. A waterproof and water vapour-permeable garment comprising at least two parts made of porous polytetrafluoroethylene film and bonded together along their adjacent edges and having a continuous coating thereon of a gas permeable material.

10. A garment according to claim 9 wherein the porous polytetrafluoroethylene film is laminated to a layer of knitted, woven or non-woven material.

## FIG. 1

2

1

## FIG. 2

1   2

3

## FIG. 3

3

1   2

## FIG. 4

3   2

1

## FIG. 5

## FIG. 6

## FIG. 7

## FIG. 8

## FIG. 9